(19) Europäisches Patentamt
European Patent Office
Office européen des brevets

(11) **EP 2 830 288 A1**

(12) **EUROPEAN PATENT APPLICATION**

(43) Date of publication:
**28.01.2015 Bulletin 2015/05**

(51) Int Cl.:
*H04L 29/08* (2006.01)  *H04N 21/433* (2011.01)
*H04N 21/81* (2011.01)

(21) Application number: **14177253.3**

(22) Date of filing: **16.07.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.07.2013 EP 13306079**

(71) Applicant: **Thomson Licensing**
**92130 Issy-les-Moulineaux (FR)**

(72) Inventors:
• **Neumann, Christoph**
**35576 Cesson-Sévigné (FR)**
• **Le Scouarnec, Nicolas**
**35576 Cesson-Sévigné (FR)**
• **Straub, Gilles**
**35576 Cesson-Sévigné (FR)**

(74) Representative: **Huchet, Anne**
**Technicolor**
**1-5 rue Jeanne d'Arc**
**92130 Issy-Les-Moulineaux (FR)**

(54) **Method for caching of data items in a cache area of a data processing system and corresponding device**

(57)    A scalable and cost-effective solution for implementing a cache in a data processing environment. A sliding window comprises a number of past time slots. For each time slot, a number of request for a data item is counted. A mean request rate for the data item is computed over the sliding window. If the mean request rate is superior to a threshold, the data item is added to cache, or the data item is removed from cache otherwise.

Fig. 3

EP 2 830 288 A1

**Description**

**1. Field.**

The present disclosure relates to the field of cache policies, and is particularly adapted for use in cloud-based storage and computing services.

**2. Technical background.**

A variety of data processing systems rely on caches: CPU caches speed-up access to memory pages; hard-disk caches speed-up access to files; network caches (e.g., proxies, CDNs) optimize network traffic, load, cost and speed-up data access.

Classical caches implement *cache replacement algorithms,* such as Least Recently Used (LRU) or Least Frequently Used (LFU), that decide which item to remove from the cache and to replace with a new item. These algorithms try to maximize the hit ratio of the cache.

Cloud-based caching consists in storing frequently accessed files on cloud storage services (e.g., Amazon S3); in other words, it uses cloud storage as a data cache. Such a cache is beneficial for files that would have been recomputed using cloud compute or retrieved from a private data center at each access without a cache.

While classical caches for data processing systems have largely proven their usefulness and efficiency, they are not well-adapted to data processing systems that rely on cloud storage (e.g., Amazon S3) and cloud compute (e.g., Amazon EC2). A first difference between caching of data in classical data processing systems and caching of data in cloud-based data processing systems is that cloud-based data processing systems do not impose a limit on the cache capacity; the size of the cache is virtually infinite. A second difference is that contrary to classical caching, cloud-based caching adopts a pay-per-use cost model. Generally, the cost is proportional to the volume of cached data times caching duration. A third difference is that there is also a cost of not caching an item, e.g., a cost of (re)computing an item using a compute service or the cost of fetching the item from a remote location. For cloud-based caching, the maximization of the hit ratio is no longer the only objective. Other parameters are also to be taken into account when designing a cloud based cache.

Thus, with the advent of cloud-based systems, cache design has to be reconsidered.

**3. Summary.**

The purpose of this disclosure is to solve at least some of the problems that occur when implementing a caching mechanism for data processing systems. The caching method and device of the current disclosure contributes to a minimization of overall cost of the data processing system.

To this end, the current disclosure comprises a method for caching of data items in a cache area in a data processing system, the method comprising: starting a time slot of a duration t and counting a number of requests for a data item until expiry of the duration t; computing a mean request rate for the data item by totaling all counted number of requests for the data item over a sliding window of a duration of d past time slots and dividing the totaled counted number of requests by the sliding window duration; adding the data item to the cache area if it is determined that the computed mean request rate for the data item is superior to a threshold, otherwise removing the data item from the cache area; and repeating the steps of the method, for adding the data item to the cache area or for removing the data item from the cache area, according to the mean request rate and the threshold.

According to a variant embodiment of the method, the threshold is defined as storage cost for storing the data item divided by a compute cost for computing of the data item.

According to a variant embodiment of the method, the duration d is equal or superior to the inverse of the threshold.

According to a variant embodiment of the method, it further comprises periodically adapting the threshold to observed storage cost and observed compute cost.

According to a variant embodiment of the method, the cache area is part of a delivery platform for transmission of video content to a plurality of receiver devices and the data items are video chunks comprising a sequence of video frames.

According to a variant embodiment of the method, the video chunks comprise generic video chunks that are transmitted to all of the plurality of receiver devices requesting a generic video chunk and wherein the video chunks further comprise targetable video chunks that are adapted, before transmitting to a receiver device of the plurality of receiver devices requesting the targetable video chunk, according to user preferences of a user of the receiver device by overlaying of targeted content in at least some video frames of the targetable video chunk, the targeted content being determined according to the user preferences.

According to a variant embodiment of the method, the storage cost is a cost of storing, by a storage service, of a targetable video chunk which is adapted according to user preferences, and wherein the compute cost is a cost of computing, by a compute service, of the targetable video chunk which is adapted according to the user preferences.

According to a variant embodiment, the data item is computed from data blocks encoded using erasure correcting codes or data compression source codes, and the computed data item is stored in the cache area if the mean request rate for the data item is superior to the threshold, or the computed data item is removed from cache area otherwise, so as to be recomputed at each request, the recomputing having the compute cost.

The present disclosure also concerns a device for caching of data items in a cache area, the device comprising a sliding window storage for storing of a counted number of requests for a data item within a time slot, the sliding window storage comprising d storage cells for storing of a counted number of requests for d past time slots, the sliding window sliding with each start of a new time slot, by removing an oldest time slot and opening a new time slot; a computing unit for computing, upon expiration of the time slot, a mean request rate for the data item by totaling all counted number of requests for the data item over the sliding window and dividing the totaled counted number of requests by the number d of past time slots in the sliding window storage; a determination unit for determining if the computed mean request rate for the data item is superior to a threshold; and a cache operating unit for adding the data item to the cache if the computed mean request rate for the data item is superior to the threshold, and for removing the data item from the cache otherwise.

## 4. List of figures.

Advantages of the present disclosure will appear through the description of particular, non-restricting embodiments, which are described with reference to the following figures:

> **Figure 1** is an example architecture for targeted advertisement overlaying, where the disclosure can be applied.
> **Figures 2a and 2b** illustrate a principle of a sliding window according to the disclosure, allowing to get a good estimation of arrival rate of requests for data items.
> **Figure 3** is a flow chart of an embodiment of the method of caching according to the disclosure.
> **Figure 4** is an example embodiment of a device for caching of data items in a cache area according the disclosure.

## 5. Detailed description of the disclosure.

The current disclosure contributes to a minimization of overall cost of a data processing system. An example use case of the current disclosure where the latter can be advantageously used is a cloud-based personalized video generation and delivery platform, where video content contains predefined advertisement placeholders for advertisement overlaying. These predefined advertisement placeholders are typically billboards that are included in the video content. Advertisements are dynamically chosen during the video delivery to a client's end user device according to the end user's profile. The dynamically chosen advertisements are overlayed into the appropriate predefined advertisement placeholders in the video content using cloud compute e.g. Amazon EC2, EC2 standing for Elastic Compute Cloud. Amazon EC2 is a web service that provides resizable compute capacity in the cloud. Alternatives to Amazon for cloud compute are for example: Terremark/vCloud Express, Eucalyptus, Slicehost/Rackspace, and others. In the example personalized video generation and delivery platform, the video content is cut into chunks such that video processing for the personalized video generation is restricted to relevant portions of the video content. Several end users with overlapping user profiles may be targeted with same advertisements in personalized chunks of a same video content. Instead of recomputing these personalized chunks for each of the several users, the platform can cache them using cloud storage (e.g., Amazon S3, alternatives are Rackspace, Windows Azure, SimpleCDN, and others). Advertisement overlaying consists in overlaying advertisements as textures or objects *over* pixel regions of image frames of a video content, in contrast to classical video advertising that interrupts the video content to show inserted advertisement sequences. With advertisement overlaying, advertisements cannot be skipped as they are an integral part of the video content itself when it is delivered to the end user device. In movie productions, object overlaying is done during a video post-production process. This is a costly process as it requires a manual verification of the final rendering. Other manual operations in the advertisement overlaying workflow includes an identification of advertisement placeholders. Advertisement placeholders are manually identified during the post-production process and overlaying and rendering are manually verified using example textures. During this manual process, metadata are generated that describe location and characteristics of the identified advertisement placeholders. Then, based on the identified advertisement placeholders and during an offline processing step, the video content is split into chunks of closed GOPs (Group Of Pictures); only chunks that contain advertisement placeholders are recomputed and personalized ("targeted") during content distribution; these chunks are referred to as "targetable" chunks, as opposed to "non-targetable" chunks, that do not contain advertisement placeholders. The video content is delivered to end user devices using adaptive streaming methods such as Apple HLS (Http Live Streaming) or MPEG DASH (Dynamic Adaptive Streaming over Http). A playlist or "manifest file" containing URLs (Uniform Resource Locator) to chunks of a video content is transmitted to the end user device. Every end user device can receive a different playlist, containing some targeted chunks. In the example cloud based video content generation and delivery platform, cloud compute is used during video content distribution to generate targeted chunks on-the-fly. Generating a targeted chunk consists in (i) decoding a chunk that contains an identified advertisement placeholder, (ii) choosing an advertisement that corresponds to the end user's profile, (iii) overlaying the chosen advertisement in every relevant image frame of the decoded chunk using the corresponding metadata, (iv) re-encode the resulting chunk of the video content in a distribution format compatible with the delivery network, and (v) transmission of the thus generated targeted chunk to the end user device and storing the generated targeted chunk in cloud cache area if needed (the process behind the decision to store generated targeted chunks into cloud cache area or not will be handled further on in this document). Thus, according to this processing, the video generation and delivery platform chooses, when an end user device asks for a given chunk, which advertisement to overlay into each placeholder of that chunk for the particular user according to the user's profile. A complete generation of the chunk using cloud compute can be avoided if the chunk is already present in the cloud cache area.

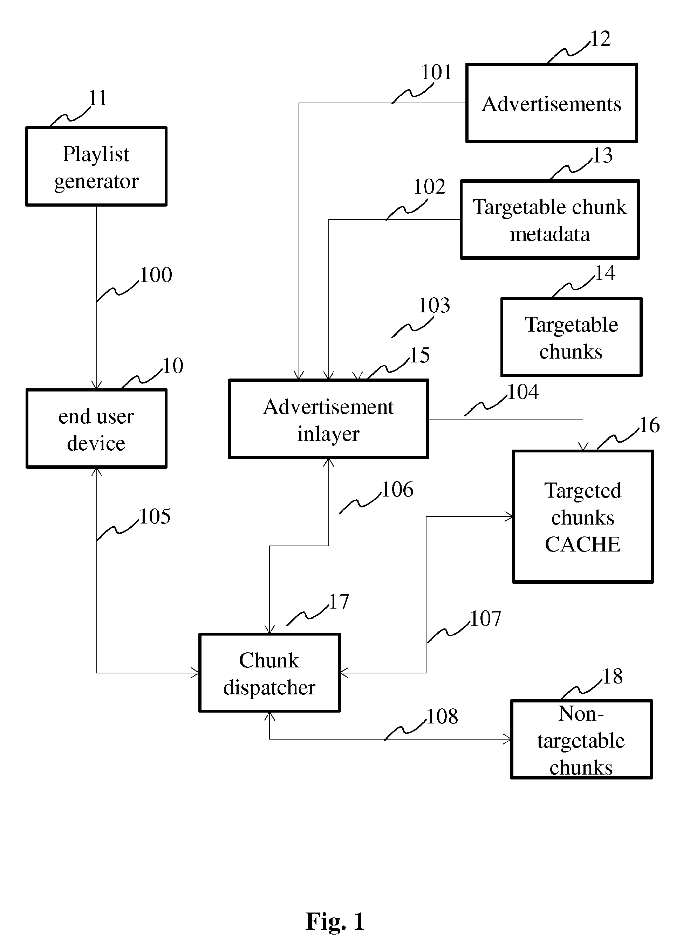

**Figure 1** is an example architecture of the above discussed video content generation and delivery platform that provides targeted advertisement overlaying. An end user device 10 obtains (arrow 100) a playlist or manifest file (comprising URLs to chunks of a requested video content) for a requested video content from playlist generator 11. When the end-user device plays the video content, it regularly requests (arrow 105) chunks; these requests are addressed to chunk dispatcher 17. The chunk dispatcher either obtains the requested chunk from advertisement overlayer 15 (arrow 106), or from cloud cache area 16 (arrow 107), or from non-targetable chunk storage 18 (arrow 108). The advertisement overlayer 15 obtains targetable chunks from targetable chunk storage 14 (arrow 103), overlays in these chunks advertisements obtained from advertisement storage 12 (arrow 101) according to metadata obtained from targetable chunk metadata storage 13 (arrow 102), then provides the resulting targeted chunks (in which advertisements are overlayed) to chunk dispatcher 17 (arrow 106) and optionally stores the targeted chunks into cloud cache area 16 (arrow 104).

Playlist generation by playlist generator 11, targeted chunk generation by advertisement overlayer 15, and redirection of chunk requests by chunk dispatcher 17 are handled by cloud compute instances. Non-targetable chunk storage 18, targeted chunks storage 16, targetable chunk storage 14, advertisement storage 12, and metadata storage 13 are stored on cloud storage.

A computing cost and a storage cost can be associated to any item of data while operating the cloud-based video content generation and delivery platform. In order to minimize its operating cost, there is a need to define the best strategy for either (re)computing or storing the items. This problem can be reformulated into a cache policy problem, that decides the items to keep or not to keep data items in the cache.

Most prior art cache policies assume a fixed size cache and are flavors of previously discussed LRU or LFU policies. According to these policies, a data item is removed from the cache as a function of data item access frequency or data item last access time. While these cache policies can in principle be adapted to a cloud environment by defining a limit to the cache size, they are not optimized for such an environment because they do not take into account a number of parameters that come into play in the cloud environment, notably storage cost and computation cost to recompute a data item if it is not in cache. Additionally, determining a limit for the cache size is not practical in real applications; for example, in the case of a cloud-based personalized video generation and delivery platform, since the cache size depends on the number of requests for a chunk and data popularity distribution such as that of the movie to which the chunk belongs.

Other prior art cache policies are time-based and initially apply a time-to-live (TTL) to every data item as it is stored in cache. A cache server using such cache policy periodically decrements the TTL. A data item is removed from cache when its TTL has expired. Time based policies aim at maintaining data consistency. They do not impose a cache size limit by themselves but are often used in addition to some LRU or LFU policy that works with fixed cache sizes. Time based policies are for example used by DNS cache resolvers and web proxies. In general, the TTL value of an item is fixed by the originating server of the item (e.g. by the authoritative DNS domain manager or the source Web server).

The above discussed cache policies are not efficient when applied to a pay-per-use model as for example in a cloud environment as they do not optimize cost of storing vs. cost of computing. There is thus a need to define new cost effective policies that are not necessarily bounded by a cache size limit but that rather consider various cost factors.

In this section, we suppose that requests for an individual data item $k$ (corresponding for example to one chunk in a movie $i$ with an advertisement $j$) arrives according to a homogeneous Poisson process of intensity $\lambda_k$. We study the cost for serving a request when a given data item is stored in a cache. The data item is deleted from the cache if it is not accessed for more than $T_k$ seconds. If the data item is not in the cache, it is computed. The storage cost is defined as being $S$ dollars per data item per second, and the computation cost is defined as being $C$ dollars per data item per computation. As a practical case, consider a video with an output bit rate of 3.5Mbit/s, which provides 720p HD quality; the video is split into ten second length chunks. Tests indicate that such chunks can be calculated in real-time using Amazon EC2 M1 Large Instances. At the time of writing of this document these instances cost 0.26$ per hour. Based on the mentioned tests, this results in a cloud compute cost $C = 7.2 \times 10^{-4}$ $ per chunk. Similarly, using the cloud storage costs of Amazon S3, cloud storage cost S = 4,86 x 10⁻⁷ $ per hour per chunk, based on a cost of 0.08$ per gigabyte per month. For the sake of clarity, any transmission cost (for transmitting a data item from or to cloud storage) is left out of the equations in this section since it is the same for data items available in the cache and for data items not available in the cache.

Let $t$ be a continuous variable corresponding time elapsed since a last access to data item $k$. Since request arrivals for access to a data item follows a homogeneous Poisson process, the probability that a next request for the data item $k$ arrives at time $t$ is

$$p(t) = \lambda_k \exp^{-\lambda_k t} \tag{1}$$

Let $X_k$ be a continuous random variable corresponding to a cost for serving a data item k. For a given request, if $t < T_k$, then the data item is served from the cache and there are only storage costs $X_k = tS$. If $t > T_k$, then the data item is stored for $T_k$ seconds, and re-computed when accessed. Hence, the expected cost for serving the data item k is

$$E[X_k] = \int_0^{T_k} p(t)tS dt + \int_{Tk}^{\infty} p(t)(T_k S + C)dt \tag{2}$$

which simplifies to

$$E[X_k] = \frac{S}{\lambda k} + \frac{(\lambda k C - S)exp^{-\lambda k Tk}}{\lambda k} \tag{3}$$

The expected cost $E[X_k]$ for serving a request when a data item is in cache has thus a first minimum for $T_k = 0$ if $\lambda_k < \frac{S}{C}$, and a second minimum for $T_k = \infty$ if $\lambda_k > \frac{S}{C}$.

If the arrival rate $\lambda_k$ for an individual data item k is perfectly known, (3) allows to determine an ideal caching policy, whereby $\frac{S}{C}$ is defined as being a threshold in order to decide to cache a data item or not:

(i) never cache the data item $k$ if its arrival rate $\lambda_k$ is smaller than the ratio: cloud storage cost over cloud compute cost $\left(\lambda_k < \frac{S}{C}\right)$;

(ii) indefinitely cache the data item $k$ if its arrival rate is greater than the ratio: cloud storage cost over cloud compute cost $\left(\lambda_k > \frac{S}{C}\right)$.

In practice, $\lambda_k$ is variable over time and cannot be perfectly known as it is not possible to foresee the future. It is therefore interesting to know how to get at best a good estimation of $\lambda_k$. According to the disclosure, in order to solve this problem, a mean request arrival rate $\lambda_k$ of each data item k (e.g. each video chunk in a movie $i$ with an advertisement $j$) is computed by periodically counting the total number of requests for the data item $k$ over a sliding temporal window and dividing the obtained total number by the duration of the sliding window. Obtained is thus a mean arrival rate $\lambda_k$ of past requests for a data item during the measurement period of the sliding window. Following the previous observation that data items for which $\lambda_k < \frac{S}{C}$ should not be stored at all, and that data items for which $\lambda_k > \frac{S}{C}$ should be stored indefinitely, this policy compares the threshold $\frac{S}{C}$ to the periodically measured value of $\lambda_k$ in order to choose between storing in cache or not of a data item k. The decision to store the data item $k$ or to not store the data item $k$ is then continuously revisited, e.g. each time the measured value $\lambda_k$ changes. A data item k that is stored in the cache is removed from the cache when the access frequency $\lambda_k$ drops below the threshold $\dfrac{S}{C}$.

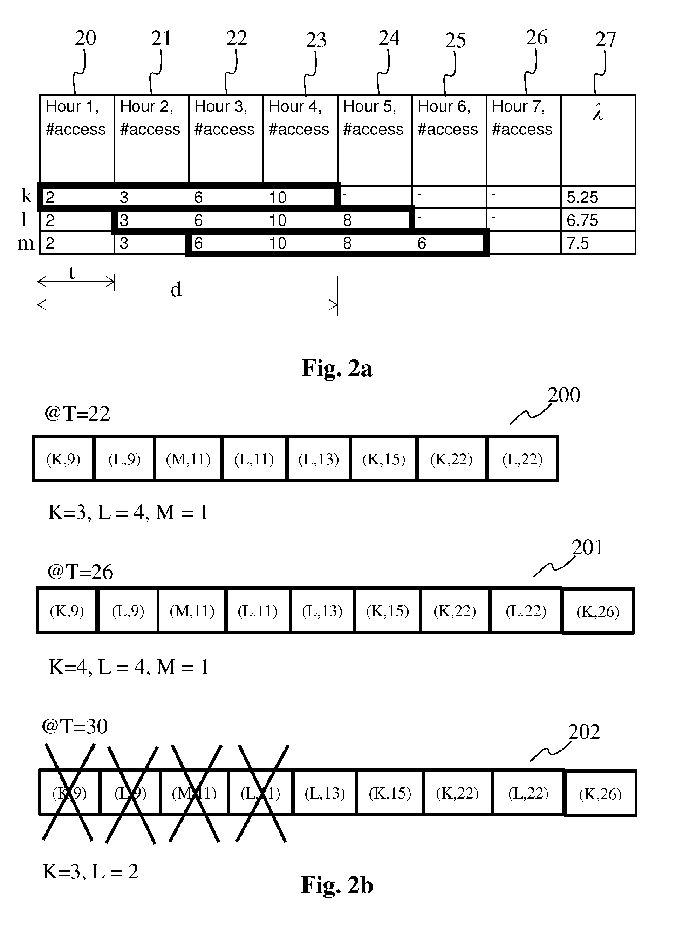

**Figures 2a and 2b** illustrate the principle of a sliding window according to the disclosure, which allows to get a good estimation of $\lambda$. The table of **figure 2a** shows a simplified example of observed request arrival rates for items over time. Table columns 20-26 represent subsequent one hour time slots. Table rows represent different data items, for example k, I and m. Column 27 represents values of $\lambda$ computed by dividing the counted total number of requests by the duration d of the sliding window, in this case $\lambda_k$ = 2+3+6+10 / 4 = 5.25 requests/hour, $\lambda_L$ = 3+6+10+8 / 4 = 6.75 requests/hour, and $\lambda_m$ = 6+10+8+6 / 4 = 7.5 requests/hour. The black rectangles represent the sliding window. As can be observed, the sliding window slides in the direction of the current time at each expiration of a time slot with a duration of t (as an example, t = 1 hour here). **Figure 2b** shows a simple example of another embodiment that allows to get a good estimation of $\lambda$. From top to bottom, three tables are depicted (200, 201, 202), representing a sliding window of a duration d = 18 time slots at different moments in time. An entry is added to the table as a request for a data item is received. The entries are represented by a pair (item, timestamp); e.g. (K,9) means that a request for item k was received at time 9. For example, at T=22 and according to table 200 data item k was requested three times, at T=9, at T=15 and at T=22, which means that its mean request rate $\lambda_k$ is 3/18; data item L was requested 4 times, at T=9, T=11, T=13, and T=22, which means that its mean request rate $\lambda_L$ =4/18; data item M was requested once, at T=11, which means that its mean request rate $\lambda_m$=1/18. At T=26 and according to table 201, data item k was further requested at T=26, and k was thus requested 4 times, resulting in a mean request rate $\lambda_k$ is 4/18. At T=30 and according to table 202, the sliding window duration has reached d=18, therefore the sliding window is updated, by removing of entries that are older than T = now() - d; thus, entries that are older than 30-18=12 are removed, that is (K,9), (L,9), (M,11) and (L,11) are removed from the sliding window. According to the updated sliding window, k was now requested 3 times, with a mean request rate $\lambda_k$ of 3/18, and L was requested 2 times with a mean request rate $\lambda_L$=2/18, while M was no longer requested, with a mean request rate $\lambda_m$=0/18.

Using either of these methods, the mean request arrival rate for a specific data item is thus computed over a time period corresponding to the sliding window duration. This mean request arrival rate is then compared to threshold, e.g. of (cloud) storage cost over (cloud) compute cost. If the computed mean request arrival rate is superior to the threshold, the data item is added or kept in cache if it was already in cache, while if the computed mean request arrival rate is lower or equal to the threshold, the data item is not added to cache, or removed from cache if it was already in cache. According to a variant embodiment the threshold is defined as $\dfrac{S}{C}$ and is thus both dependent on the storage cost S (cost for keeping an item stored) and on the computation cost C (cost of computing an item).

Advantageously, the sliding window duration d is set to a value that is the inverse of the threshold or superior to the inverse of the threshold, e.g. d is equal or superior to $\dfrac{C}{S}$. This value for d is based on the following observation, that a sliding window with a duration $d$ can measure arrival rates greater than 1/$d$ but is not able to measure arrival rates smaller than 1/$d$. Thus, to determine if an arrival rate is greater or smaller than $\dfrac{S}{C}$, it follows that the sliding window has a duration of at least $\dfrac{C}{S}$.

The sliding window duration $d$ may vary for various reasons:

- as d has a duration of at least the inverse of the threshold, $d$ may change as costs C or S change.
- upon data processing system start, there is not enough information in the past to have a complete d, so d is limited by the elapsed time from the start to the current time, until the elapsed time is $d$.
- when the sliding window update is performed every time unit (for example at every time slot end), $d$ can vary as the window start remains fixed (e.g., for one hour) while the window end advances with time.

Also, the sliding window may not end exactly at the current time, but may end within x seconds before current time:

- for example, the request arrivals counted in the sliding window may be updated with new requests by a background process that is triggered every hour, or when the system is lowly loaded, the new requests being entered into a processing log as they arrive, until they are handled by the background process;
- for example, the request arrivals counted in the sliding window may be updated every time unit (e.g. every hour) whenever the expiration process shifts the sliding window by one time unit (e.g. by one hour) if the sliding window is implemented as discrete time slots.

The fact that *d* and *x* vary has no impact on the measurement of $\lambda$, and as a consequence their variation has no impact on the request arrival rate to the threshold since $\lambda$ is computed with the number of requests divided by the duration of the window *d*, thus giving a measure in requests per time unit (e.g. per second, per hour, per day).

According to an advantageous variant embodiment of the disclosure, the threshold is periodically adapted to storage and compute costs. This allows to dynamically change the threshold as costs evolve. Adapting of the threshold can have an impact on the sliding window duration d, since the sliding window has a duration of at least $\frac{C}{S}$ as is mentioned above.

According to an advantageous variant embodiment, the caching method according to the disclosure is implemented in a delivery platform for transmission of video content to a plurality of receiver devices, and the data items are video chunks that comprise video frames.

According to a variant embodiment, these video chunks are either generic video chunks that are transmitted without distinction to all of the plurality of receiver devices, or "personalizable" or "targetable" video chunks that are personalized or targeted according to a user preference or profile of a user of a specific receiver device of the plurality of receiver devices. The personalization or targeting of the personalizable or targetable video chunks is for example done by overlaying of targeted content such as advertisements in one or more video frames of the video chunks that are to be personalized/targeted, the advertisements being chosen according to the mentioned user preferences.

According to a variant embodiment of the present disclosure, the previous mentioned storage cost is a cost of storing by a storage service of a targetable video chunk that is adapted to the user preferences (such as cloud storage cost), and the compute cost is a cost of computing (for encoding) by a compute service of an targetable video chunk in order to adapt it to user preferences (such as cloud computing cost).

According to a variant embodiment, the data items are computed from data blocks encoded using erasure correcting codes or data compression source codes, and the computed data items are stored in the cache if their request arrival rate is superior to the threshold. Otherwise, the computed data items are not stored in cache, and are thus to be (re-)computed if they are requested, at the cost of the compute cost. In this case, the storage cost is the cost of storing by a storage service, of an encoded data item; and the compute cost is a cost of decoding, by a compute service, of an encoded data block.

The above discussed variants can be combined between them to form particular advantageous variant embodiments.

While some of the above examples are based on Amazon cloud computing architecture, the reader of this document will understand that the example above can also be adapted to computing architectures that are different from the Amazon cloud computing architecture without departing from the principles of the disclosure.

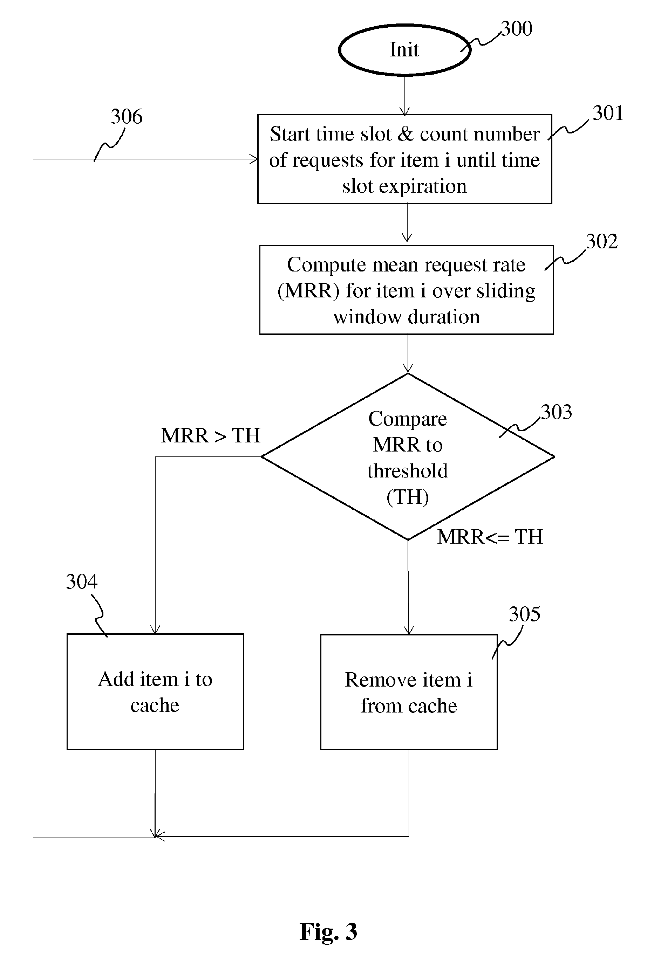

**Figure 3** illustrates a flow chart of a particular embodiment of the method of the disclosure. In a first initialization step 300, variables are initialized that are used for the method. In a step 301, when a new time slot of a duration t is started, the number of requests for the data item is counted during the time slot, until expiry of the duration of the time slot. In a step 302 a mean request rate is computed for the data item by totaling all counted number of requests for the data item over a sliding window of a duration of d past time slots and by dividing the totaled counted number of requests by the sliding window duration. In a step 304, the data item is added to the cache area if it is determined in step 303 that the computed mean request rate for the data item is superior to a threshold, otherwise, in a step 305 the data item is removed from the cache area; and the steps of the method are repeated (306) so that in each iteration it is determined again if the data item is to be added or removed, according to the (re)computed mean request rate and the (possibly changed, see further on) threshold. Since the sliding window is over a duration of d past time slots, it is understood that the sliding window slides with each iteration of the steps of the method as a new time slot is started in each iteration of step 301.

As described previously, according to a variant embodiment, the threshold is periodically adapted or reevaluated; this is advantageous for example if the threshold is based on parameters that are not fixed; e.g. if the threshold is defined as storage cost for storing the data item in cache divided by compute cost for computing the data item again when it is not in cache, it is advantageous to reevaluate the threshold as storage cost evolves differently than compute cost. This is for example the case in a cloud storage and computing environment, as previously described.

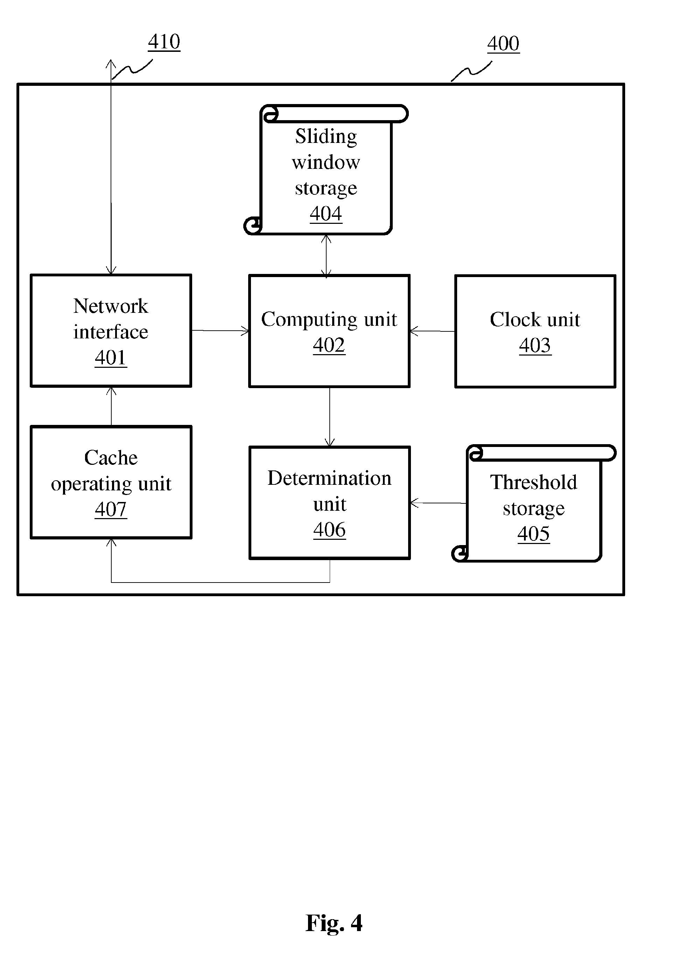

**Figure 4** is an example embodiment of a device for caching of data items in a cache area according the disclosure. The device (400) comprises a network interface (401) connected the device to a network (410), e.g. for adding or removing data items from a cache area (not shown), and for counting of requests for data items; a clock unit (403) for providing of a time reference allowing a determination of expiration of time slots and starting new ones; a computing unit (402) for computing mean request rates; a determining unit (406) for determining if the computed mean request rate is superior to a threshold; a cache operating unit (407) for adding the data item to the cache (if not yet in cache) if the mean request rate of requests for the data item is superior to the threshold, or for removal of the data item from cache (if already in cache) otherwise. Other elements are a threshold storage (405) for storing of the threshold value, and a sliding window storage (404) for storing of the elements of the sliding window, e.g. a storage zone comprising d storage cells per data item, each of the d storage cells storing a counted number of requests for a particular time slot. The sliding window slides with each start of a new time slot, i.e. the oldest time slot is removed, whereas a new time slot is opened; see for example figures 2a/b and its descriptions. The sliding window is for example implemented as a circular buffer.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code and so forth), or an embodiment combining hardware and software aspects that can all generally be defined to herein as a "circuit", "module" or "system". Furthermore, aspects of the present principles can take the form of a computer readable storage medium. Any combination of one or more computer readable storage medium(s) can be utilized.

Thus, for example, it will be appreciated by those skilled in the art that the diagrams presented herein represent conceptual views of illustrative system components and/or circuitry embodying the principles of the present disclosure. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

## Claims

1. A method for caching of data items in a cache area of a data processing system, the method being **characterized in that** it comprises:

   starting a time slot (301) of a duration t and counting a number of requests for a data item until expiry of said duration t;
   computing (302) a mean request rate for said data item by totaling all counted number of requests for said data item over a sliding window of a duration of d past time slots and dividing said totaled counted number of requests by said sliding window duration;
   adding (304) said data item to said cache area if it is determined (303) that said computed mean request rate for said data item is superior to a threshold, otherwise removing said data item from said cache area; and
   repeating (306) the steps of the method, for adding said data item to said cache area or for removing said data item to said cache area, according to said mean request rate and said threshold.

2. The method for caching of data items according to claim 1, wherein said threshold is defined as a storage cost for storing said data item divided by a compute cost for computing of said data item.

3. The method according to any of Claim 1 to 2, wherein said duration d is equal or superior to an inverse of said threshold.

4. The method according to Claim 1 to 3, further comprising periodically adapting said threshold to storage cost and compute cost.

5. The method according to any of Claims 1 to 4, wherein said cache area is part of a delivery platform for transmission of video content to a plurality of receiver devices and said data items are video chunks comprising a sequence of video frames.

6. The method according to Claim 5, wherein said video chunks comprise generic video chunks that are transmitted to all of said plurality of receiver devices requesting a generic video chunk and wherein said video chunks further comprise targetable video chunks that are adapted, before transmitting to a receiver device of said plurality of receiver devices requesting the targetable video chunk, according to user preferences of a user of the receiver device by overlaying of targeted content in at least some video frames of the targetable video chunk, the targeted content being determined according to said user preferences.

7. The method according to Claim 6, wherein said storage cost is a cost of storing, by a storage service, of a targetable video chunk which is adapted according to user preferences, and wherein said compute cost is a cost of computing, by a compute service, of said targetable video chunk which is adapted according to said user preferences.

8. The method according to any of Claims 2 to 7, wherein said data item is computed from data blocks encoded using erasure correcting codes or data compression source codes, and said computed data item is stored in said cache area if said mean request rate for said data item is superior to said threshold, or said computed data item is removed from cache area otherwise, so as to be recomputed at each request, said recomputing having said compute cost.

9. A device for caching of data items in a cache area, the device being **characterized in that** it comprises the following means:

a sliding window storage (404) for storing of a counted number of requests for a data item within a time slot, the sliding window storage comprising d storage cells for storing of a counted number of requests for d past time slots, the sliding window sliding with each start of a new time slot, by removing an oldest time slot and opening a new time slot;

a computing unit (402) for computing, upon expiration of said time slot, a mean request rate for said data item by totaling all counted number of requests for said data item over said sliding window and dividing said totaled counted number of requests by the number d of past time slots in the sliding window storage;

a determination unit (406) for determining if the computed mean request rate for the data item is superior to a threshold; and

a cache operating unit (407) for adding the data item to the cache if the computed mean request rate for the data item is superior to the threshold, and for removing the data item from the cache otherwise.

**Fig. 1**

| | Hour 1, #access | Hour 2, #access | Hour 3, #access | Hour 4, #access | Hour 5, #access | Hour 6, #access | Hour 7, #access | λ |
|---|---|---|---|---|---|---|---|---|
| k | 2 | 3 | 6 | 10 | - | - | - | 5.25 |
| l | 2 | 3 | 6 | 10 | 8 | - | - | 6.75 |
| m | 2 | 3 | 6 | 10 | 8 | 6 | - | 7.5 |

20 21 22 23 24 25 26 27

t
d

**Fig. 2a**

@T=22                                              200

| (K,9) | (L,9) | (M,11) | (L,11) | (L,13) | (K,15) | (K,22) | (L,22) |
|---|---|---|---|---|---|---|---|

K=3, L = 4, M = 1

@T=26                                              201

| (K,9) | (L,9) | (M,11) | (L,11) | (L,13) | (K,15) | (K,22) | (L,22) | (K,26) |
|---|---|---|---|---|---|---|---|---|

K=4, L = 4, M = 1

@T=30                                              202

| (K,9) | (L,9) | (M,11) | (L,11) | (L,13) | (K,15) | (K,22) | (L,22) | (K,26) |
|---|---|---|---|---|---|---|---|---|

K=3, L = 2

**Fig. 2b**

**Fig. 3**

**Fig. 4**

Europäisches
Patentamt

European
Patent Office

Office européen
des brevets

**EUROPEAN SEARCH REPORT**

Application Number

EP 14 17 7253

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/217113 A1 (KATZ ARIEL [US] ET AL) 20 November 2003 (2003-11-20) | 1,9 | INV. H04L29/08 H04N21/433 H04N21/81 |
| Y | * abstract * * paragraph [0006] - paragraph [0008] * * paragraph [0037] - paragraph [0074] * * claims 1-2, 6-8, 10-12, 17-24; figures 1-7 * | 2-8 | |
| Y | US 2013/185229 A1 (NAGA KRISHNA P PUTTASWAMY [US] ET AL) 18 July 2013 (2013-07-18) * paragraph [0005] - paragraph [0006] * * paragraph [0030] - paragraph [0035] * * paragraph [0051] - paragraph [0078] * * claims 1-24; figures 1, 3, 6 * | 2-8 | |
| Y | US 2013/179490 A1 (NAGA KRISHNA PUTTASWAMY [US] ET AL) 11 July 2013 (2013-07-11) * paragraph [0004] * * paragraph [0007] * * paragraph [0010] * * paragraph [0045] * * paragraph [0052] - paragraph [0057] * * paragraph [0068] - paragraph [0074] * * figures 5,7 * | 5-7 | TECHNICAL FIELDS SEARCHED (IPC) H04L H04N |

The present search report has been drawn up for all claims

| Place of search | Date of completion of the search | Examiner |
|---|---|---|
| The Hague | 22 October 2014 | Florou, Rafaella |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**  EP 14 17 7253

This annex lists the patent family members relating to the patent documents cited in the above-mentioned European search report.
The members are as contained in the European Patent Office EDP file on
The European Patent Office is in no way liable for these particulars which are merely given for the purpose of information.

22-10-2014

| Patent document cited in search report | Publication date | Patent family member(s) | Publication date |
|---|---|---|---|
| US 2003217113 A1 | 20-11-2003 | NONE | |
| US 2013185229 A1 | 18-07-2013 | NONE | |
| US 2013179490 A1 | 11-07-2013 | CN 104054319 A<br>EP 2803180 A1<br>US 2013179490 A1<br>WO 2013106400 A1 | 17-09-2014<br>19-11-2014<br>11-07-2013<br>18-07-2013 |

EPO FORM P0459

For more details about this annex : see Official Journal of the European Patent Office, No. 12/82